# EUROPEAN PATENT APPLICATION

(11) **EP 4 813 702 A1**
(43) Date of publication of application: **30.09.2026**
(21) Application number: 26166314.0
(22) Date of filing: 20.03.2026
(51) Int. Cl.: B60K 1/04, H01M 10/613, H01M 10/6551

(54) **VEHICLE REAR SECTION STRUCTURE**

(30) Priority: 26.03.2025 JP 2025052181
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); FUJIWARA, Nobuyoshi, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP); YONEZAWA, Shota, Toyota-shi, Aichi-ken, 471-8571 (JP)
(74) Representative: TBK

(57) **Abstract**

A vehicle rear section structure including a battery case housing one or more battery cells inside, a first equipment arranged at an upper side in a vehicle height direction of a rear portion of the battery case, a second equipment arranged at an upper side in the vehicle height direction of the first equipment, and a thermoconductive heat dissipation member arranged between the first equipment and the second equipment in the vehicle height direction.

## Description

### BACKGROUND

### Technical Field

The present disclosure relates to a vehicle rear section structure.

### Related Art

Japanese Patent Application Laid-Open (JP-A) No. 2013-023219 discloses a vehicle that is installed with a battery pack configured from plural battery cells that have been combined in series and in parallel and housed in a battery case.

Various equipment including heat emitting equipment is arranged in a space between an upper side of a vehicle rear portion of the battery case housing the battery cells, and a rear seat. There is accordingly room for improvement regarding a structure to release heat dissipated from such equipment.

### SUMMARY

The present disclosure provides a vehicle rear section structure capable of releasing heat dissipated from equipment.

A vehicle rear section structure according to the present disclosure of a first aspect includes a battery case housing one or more battery cells inside, a first equipment arranged at an upper side in a vehicle height direction of a rear portion of the battery case, a second equipment arranged at an upper side in the vehicle height direction of the first equipment, and a thermoconductive heat dissipation member arranged between the first equipment and the second equipment in the vehicle height direction.

In the vehicle rear section structure according to the present disclosure of the first aspect, the thermoconductive heat dissipation member is arranged in the vehicle height direction between the first equipment and the second equipment, and so heat dissipated from the first equipment and the second equipment can be released by the heat dissipation member.

A vehicle rear section structure according to the present disclosure of a second aspect is the configuration of the first aspect, further including a box-shaped equipment pedestal at which the first equipment is mounted, the equipment pedestal having an open top at a vehicle upper side, wherein the heat dissipation member is attached to an upper end of the equipment pedestal.

In the vehicle rear section structure according to the present disclosure of the second aspect, the heat dissipation member is attached to the upper end of the box shaped equipment pedestal mounted with the first equipment, resulting in the first equipment being housed inside a box body configured by the equipment pedestal and the heat dissipation member, and enabling heat trapped inside the box body to be released efficiently by the heat dissipation member.

A vehicle rear section structure according to the present disclosure of a third aspect is the configuration of the first aspect or the second aspect, wherein the heat dissipation member is made of aluminum and has an upper surface in the vehicle height direction on which the second equipment is mounted.

In the vehicle rear section structure according to the present disclosure of the third aspect, the heat dissipation member is made of aluminum and has the second equipment mounted to the upper surface thereof, thereby enabling heat dissipated from the second equipment to be released efficiently by the heat dissipation member.

The vehicle rear section structure according to the present disclosure of a fourth aspect is the configuration of any aspect depending from the second aspect, wherein the equipment pedestal is made of aluminum.

In the vehicle rear section structure according to the present disclosure of the fourth aspect, the equipment pedestal is made of aluminum, and so heat dissipated from the first equipment can be released by the equipment pedestal, and heat dissipated from the second equipment can be released through the heat dissipation member.

The vehicle rear section structure according to the present disclosure exhibits the excellent advantageous effect of enabling heat dissipated from equipment to be released.

### BRIEF DESCRIPTION OF THE DRAWINGS

Exemplary embodiments of the present disclosure will be described in detail based on the following figures, wherein:
Fig. 1 is an exploded perspective view schematically illustrating relevant portions of a vehicle applied with a vehicle rear section structure according to an exemplary embodiment of the present disclosure; and
Fig. 2 is a side view cross-section illustrating an example of a vehicle rear section structure according to an exemplary embodiment of the present disclosure.

### DETAILED DESCRIPTION

Description follows regarding a vehicle rear section structure according to an exemplary embodiment of the present disclosure, with reference to the drawings. Configuration elements indicated using the same reference numerals across the drawings means that they are the same configuration elements. However, unless explicitly stated otherwise in the present specification, each of the configuration elements is not limited to being one thereof, and there may be plural thereof.

Moreover, sometimes description is omitted for duplicate configuration and duplicate reference numerals across the drawings. Note that the present disclosure is not limited to the following exemplary embodiment and, within the scope of the object of the present disclosure, appropriate modifications may be implemented thereto, such as omitting configuration, substituting with different configuration, and combining an exemplary embodiment with various modified examples, and the like.

### Vehicle Structure

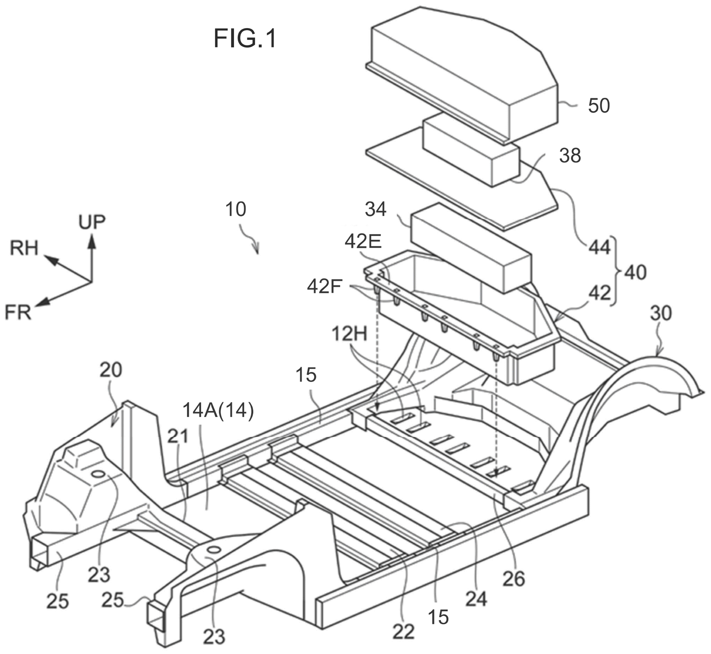

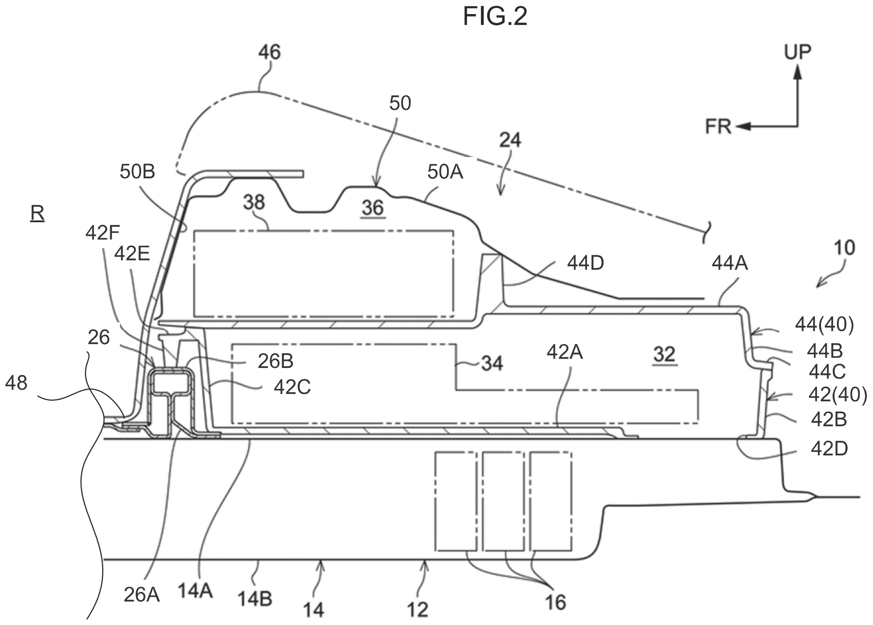

Fig. 1 is a perspective view schematically illustrating relevant portions of a vehicle 10 applied with a vehicle rear section structure according to an exemplary embodiment of the present disclosure, and Fig. 2 is a side view cross-section illustrating an example of the vehicle rear section structure. Arrow FR, arrow UP, and arrow RH in the drawings respectively indicate vehicle forward, vehicle upward, and vehicle rightward directions of a vehicle 10.

As illustrated in Fig. 1 and Fig. 2, a battery pack 12 is provided at a front-rear direction central section of the vehicle 10. The battery pack 12 is provided at a lower section of the vehicle. Moreover, as an example, a floor panel is not provided to the vehicle 10 of the present exemplary embodiment because the upper surface of the battery pack 12 configures a vehicle cabin floor section.

A left-right pair of rockers 15 that extend in a vehicle front-rear direction are provided at the two vehicle width direction sides of the battery pack 12. The rockers 15 are framework members formed with a substantially rectangular closed cross-section profile. The battery pack 12 is attached to the rockers 15 using non-illustrated fasteners.

The front end portions of the rockers 15 are connected to a front module 20. The rear end portions of the rockers 15 are connected to a rear module 30. The front module 20 and the rear module 30 are each, for example, integrally formed by casting.

The front module 20 is, for example, configured including a dash panel section 21, suspension tower sections 23, front side member sections 25, and the like.

The dash panel section 21 extends in the vehicle width direction and vehicle height direction, and partitions between a vehicle internal space, and a vehicle external space. The front side member sections 25 extend from the two vehicle width direction end portions of the dash panel section 21 toward the vehicle front side, and configure load paths during a head on collision. The suspension tower sections 23 are provided as a left-right pair, and are configured so as to be able to support respective non-illustrated suspensions.

A first cross member 22 and a second cross member 24, which are cross members, are provided at vehicle front-rear direction central portions of the rockers 15. The first cross member 22 and the second cross member 24 respectively extend along the vehicle width direction above the battery pack 12, and are provided spanning between the left-right pair of rockers 15. A non-illustrated vehicle front seat is attached to the first cross member 22 and the second cross member 24.

A third cross member 26, which is a cross member, is provided at vehicle front-rear direction rear side portions of the rockers 15. The third cross member 26 also extends in the vehicle width direction above the battery pack 12, spanning between the left-right pair of rockers 15.

As illustrated in Fig. 2, the third cross member 26 is formed by superimposing two sheets of metal sheet material. Specifically, the third cross member 26 is formed including a cross member main body 26A and a reinforcement member 26B, with the reinforcement member 26B on the outside formed so as to cover the cross member main body 26A on the inside.

More specifically, the cross member main body 26A is joined to the reinforcement member 26B when in a state arranged at the inside of the reinforcement member 26B, and the reinforcement member 26B is formed with a downwardly open, hat shaped cross-section in side view cross-section as illustrated in Fig. 2. Lower end portions of the cross member main body 26A and the reinforcement member 26B are respectively bent along folds so as to run along the vehicle front-rear direction superimposed on each other.

### Battery Pack

As illustrated in Fig. 2, the battery pack 12 for storing power to supply to a motor of the vehicle 10 is provided at a lower section of the vehicle 10. The battery pack 12 is configured including a battery case 14 formed in a box shape, and plural battery cells 16 housed inside the battery case 14. The battery case 14 is configured including an upper case 14A configuring an upper section of the battery case 14, and a lower case 14B configuring a lower section of the battery case 14.

The upper case 14A and the lower case 14B are formed in plate shapes having a thickness direction along the height direction and extending in both the front-rear direction and the left-right direction. The plural battery cells 16 are arranged between the upper case 14A and the lower case 14B in a state alongside each other in the front-rear direction.

The upper case 14A is arranged above the battery cells 16, is an upper cover for covering the battery cells 16, and as stated above, the upper surface thereof configures the vehicle cabin floor section. An opening (omitted in the drawings) is formed in a vehicle front-rear direction rear end portion of the upper case 14A. This opening is in communication with an opening 42D of an equipment pedestal 42, described later, and an internal space of the battery pack 12, and an internal space of an equipment case 40, described later, are in communication with each other through this opening.

Note that the battery pack 12 may be configured with only an upper case covering above the battery cells 16. In such cases, a member may be provided to support the battery cells 16 from below, instead of the lower case 14B.

### Equipment Case

The equipment case 40 housing various equipment is arranged at an upper side of the battery case 14 on a right (R) side of a cabin. The equipment case 40 includes the equipment pedestal 42 and a lid 44 serving as a heat dissipation member. The equipment pedestal 42 is a casing formed in a box shape open at a vehicle upper side, namely having an open upper end.

The equipment pedestal 42 includes a lower wall 42A that is arranged at an upper surface of the upper case 14A of the battery case 14 and that extends along the upper case 14A, a rear wall 42B that extends upward from a rear end of the lower wall 42A, and a front wall 42C that extends upward from a front end of the lower wall 42A. An opening 42D is formed in a region on the rear side of the lower wall 42A, with a harness and the like, omitted in the drawings, passing through the opening 42D. The equipment pedestal 42 includes a front flange 42E that extends forward from an upper end of the front wall 42C, and bosses 42F that project downward from a region on the front side of the front flange 42E.

A front end portion of the equipment pedestal 42 is fixed to the third cross member 26 by screwing non-illustrated bolts, which have been inserted from above through the front flange 42E and the bosses 42F of the equipment pedestal 42, into non-illustrated nuts provided to the third cross member 26.

In the present exemplary embodiment, as in the example illustrated in Fig. 2, the equipment pedestal 42 is formed such that the rear wall 42B has an upper end positioned further to the lower side than the upper end of the front wall 42C. Note that a step between the rear wall 42B and the front wall 42C is omitted from illustration in Fig. 1.

The substance from which the equipment pedestal 42 is made is not particularly limited, however, the equipment pedestal 42 is preferably made of aluminum from the perspective of raising performance in the dissipation of heat of the heat emitting equipment such as relays, a junction box 34, and the like, as described later. Namely, the substance from which the equipment pedestal 42 is made is preferably a substance having a high thermal conductivity such as aluminum or the like. Moreover, the equipment pedestal 42 is more preferably a die-cast member (casting) formed by casting aluminum or the like. Note that the equipment pedestal 42 is not necessarily a casting, and may alternatively be formed by a metal (for example aluminum or stainless steel) sheet material or from a resin or the like. Heat from heat emitting equipment such as relays, the junction box 34, and the like is dissipated to the equipment pedestal 42 even when the equipment pedestal 42 is formed from a metal sheet material or resin.

The lid 44 is positioned overlapping with a seat cushion 46, described below, when viewed from above, and is arranged at a vehicle height direction lower side of the seat cushion 46 and at a vehicle height direction upper side of the battery case 14. Specifically, the lid 44 is a seal member for closing off an opening (opening portion) at an upper end of the equipment pedestal 42, and is fixed to the equipment pedestal 42 using non-illustrated fastening members. The lid 44 includes an upper wall 44A that extends in the front-rear direction and left-right direction, a rear wall 44B that extends downward from a rear end of the upper wall 44A, and a rear flange 44C that extends rearward from a lower end of the rear wall 44B. The lid 44 also includes an upper projection 44D that projects upward from a front-rear direction intermediate portion of the upper wall 44A.

The lid 44 is thermoconductive, and is preferably formed from a substance having a high thermal conductivity such as aluminum, for example. Note that the lid 44 may be formed from a metal (for example aluminum or stainless steel) sheet material, or from a resin or the like that has a rigidity of the same order as that of a metal. Heat from heat emitting equipment such as relays or the like is still dissipated to the equipment pedestal 42 when the equipment pedestal 42 is formed from a metal sheet material or resin or the like. The lid 44 may also be formed from a die-cast member (casting) formed by casting aluminum or the like.

A first equipment placement space 32 is formed between the lid 44 and the equipment pedestal 42 by the lid 44 being attached to the equipment pedestal 42 from above. The junction box 34 serving as first equipment is arranged in this first equipment placement space 32. Namely, the equipment case 40 for housing the junction box 34 inside is formed by joining a lower end portion of the lid 44 to the equipment pedestal 42. Note that the junction box 34 is supported by the upper surface of the lower wall 42A of the equipment pedestal 42, and is fixed to the lower wall 42A of the equipment pedestal 42 by non-illustrated fixing members.

Although not illustrated in the drawings, a relay, auxiliary equipment, and the like are provided inside the junction box 34. Such auxiliary equipment includes, for example, a power distribution unit (PDU), an electronic control unit (ECU), and the like. The relay and auxiliary equipment are coupled to the battery pack 12 by a non-illustrated wiring harness or the like, and are electrically connected to the battery pack 12. The heat emitting equipment such as relays and the like are driven by power supplied from the battery pack 12, and sometimes generate heat when driven.

The equipment case 40 housing the junction box 34 is partially disposed above the upper case 14A of the battery pack 12. An example of "partially disposed" is illustrated by being disposed at a vehicle front-rear direction part (for example a rear side) of the battery pack 12 that extends in the vehicle front-rear direction and the width direction.

### Auxiliary Equipment Cover

An auxiliary equipment cover 50 is formed with a thinner thickness than that of the equipment pedestal 42 and the lid 44 described above, such as by pressing forming a steel sheet material. The auxiliary equipment cover 50 of the present exemplary embodiment is configured with a structure divided in the vehicle width direction (a three-part structure, for example). A vehicle height direction bending rigidity of the auxiliary equipment cover 50 is set so as to be a lower bending rigidity than the vehicle height direction bending rigidity of the equipment pedestal 42 and the lid 44 described above. The auxiliary equipment cover 50 includes an upper wall 50A arranged facing the upper wall 44A of the lid 44 along the height direction, and a front wall 50B extending downward from a front end of the upper wall 50A.

The auxiliary equipment cover 50 is attached to the lid 44 from the upper side, and a second equipment placement space 36 is formed between the auxiliary equipment cover 50 and the lid 44. A charger 38, such as a 2-IN-1 charger or the like and serving as second equipment, is disposed in the second equipment placement space 36 at a front side of the upper projection 44D. In the present exemplary embodiment, the charger 38 is supported by the upper surface at the vehicle front-rear direction front side of the upper wall 44A of the lid 44, is specifically supported by the upper surface of the upper wall 44A further toward the front side than the upper projection 44D, and is fixed to the upper surface of the upper wall 44A of the lid 44 through non-illustrated fixing members. Moreover, as illustrated in Fig. 1 and Fig. 2, the lid 44 is arranged between the junction box 34 and the charger 38.

### Seat Cushion etc.

A seat cushion 46 configuring part of a vehicle rear seat is provided at the upper side of the auxiliary equipment cover 50. The seat cushion 46 is arranged at the vehicle height direction upper side of a vehicle rear portion of the battery case 14. A carpet 48 is provided at the lower side of the seat cushion 46, with the carpet 48 covering the equipment case 40 and the third cross member 26 from the front side thereof.

A spacing in the height direction between the lid 44 and the seat cushion 46 at a front side end portion of the charger 38 is set so as to be wider than a spacing in the height direction between the lid 44 and the seat cushion 46 at a rear side end portion of the charger 38. Furthermore, the spacing in the height direction between the lid 44 and the seat cushion 46 widens on progression from the rear side end portion of the charger 38 toward the front side end portion of the charger 38.

### Operation and Advantageous Effects

Next, description follows regarding the operation and advantageous effects of the present exemplary embodiment.

In the vehicle rear section structure according to the present exemplary embodiment, as a thermoconductive heat dissipation member, the lid 44 is arranged in the vehicle height direction between the junction box 34 serving as a first equipment and the charger 38 serving as a second equipment, and so heat dissipated from the junction box 34 and the charger 38 can be released by the lid 44.

Moreover, in the vehicle rear section structure of the present exemplary embodiment, the lid 44 is attached to the upper end of the box shaped equipment pedestal 42 mounted with the junction box 34, resulting in the junction box 34 being housed inside a box body configured by the equipment pedestal 42 and the lid 44, and enabling the heat trapped in the interior of the box body to be efficiently released by the lid 44.

Moreover, in the vehicle rear section structure of the present exemplary embodiment, the lid 44 is made of aluminum, and has the charger 38 mounted to the upper surface thereof, enabling the heat dissipated from the charger 38 to be efficiently released by the lid 44.

Moreover, in the vehicle rear section structure of the present exemplary embodiment, due to the equipment pedestal 42 being made of aluminum, the heat dissipated from the junction box 34 can be released by the equipment pedestal 42, and also the heat dissipated from the charger 38 can be released through the lid 44. Namely, the heat dissipated from the junction box 34 and the charger 38 can be released by the equipment pedestal 42.

Moreover, in the vehicle rear section structure of the present exemplary embodiment, the charger 38 serving as a second equipment is supported on the upper surface of the equipment case 40 that internally houses the junction box 34 serving as a first equipment, and so a new pedestal for supporting the charger 38 is not required. This thereby enables an increase in the number of components to be suppressed.

Moreover, in the vehicle rear section structure of the present exemplary embodiment, the charger 38 is fixed to the upper wall 44A in a state arranged at the upper side of the upper wall 44A, which is a region at the front side of the lid 44. This thereby enables maintenance on the charger 38 to be performed with ease from the cabin right side.

Note that some of the above-described configuration of the present exemplary embodiment may be omitted or modified.

Although the present disclosure has been described by way of an exemplary embodiment, the present disclosure is not limited thereto, and obviously various other modifications may be implemented within a scope not departing from the spirit thereof.

## Claims

1. A vehicle rear section structure comprising:
a battery case (14) housing one or more battery cells inside;
a first equipment (34) arranged at an upper side in a vehicle height direction of a rear portion of the battery case (14);
a second equipment (38) arranged at an upper side in the vehicle height direction of the first equipment (34); and
a thermoconductive heat dissipation member (44) arranged between the first equipment (34) and the second equipment (38) in the vehicle height direction.

2. The vehicle rear section structure of claim 1, further comprising a box-shaped equipment pedestal (42) at which the first equipment (34) is mounted, the equipment pedestal (42) having an open top at a vehicle upper side, wherein the heat dissipation member (44) is attached to an upper end of the equipment pedestal (42).

3. The vehicle rear section structure of claim 1, wherein the heat dissipation member (44) is made of aluminum and has an upper surface in the vehicle height direction on which the second equipment (38) is mounted.

4. The vehicle rear section structure of claim 2, wherein the equipment pedestal (42) is made of aluminum.
